Europäisches Patentamt

(19) European Patent Office

Office européen des brevets

(11) Publication number: **0 452 245 A1**

## (12) EUROPEAN PATENT APPLICATION

(21) Application number: **91500034.3**

(22) Date of filing: **04.04.91**

(51) Int. Cl.⁵: **A22C 11/12**

(30) Priority: **09.04.90 ES 9001028**

(43) Date of publication of application:
**16.10.91 Bulletin 91/42**

(84) Designated Contracting States:
**AT BE CH DE DK ES FR GB GR IT LI LU NL SE**

(71) Applicant: **Lorenzo Barroso, Angel**
**Sant Pelegri, 28-38**
**E-08301 Mataro (Barcelona) (ES)**

(72) Inventor: **Lorenzo Barroso, Angel**
**Sant Pelegri, 28-38**
**E-08301 Mataro (Barcelona) (ES)**

(74) Representative: **Ferregüela Colon, Eduardo**
**Agricultura, 99**
**E-08019 Barcelona (ES)**

(54) **A machine for tying the ends of sausages or the like.**

(57) A machine for tying simultaneously both ends of sausages (6), supplied by a continuous charge formed by a sheetlike support member (1) having apertures (7) surrounded by rings of a string (8) provided with preformed slipknots (4), comprising means for supporting and entraining the charge, string drawing means, knot tightening means and purge means. The support and entraining means are formed by a hollow vertical cylindrical member (10), provided with apertures (11) and pins (12), rotatable about its axis, feeding the charge step by step. The tightening means comprise two plates (15) above the upper edge of the charge, with the inner edge thereof separated from a vertical support plate (14) at a distance insufficient to allow passage of the slipknots. The purge means comprise a semicylindrical hollow purge plate (19) adjacent the cylindrical member and vertically movable, provided with two pairs of outwardly and downwardly divergent rods (22).

EP 0 452 245 A1

Jouve, 18, rue Saint-Denis, 75001 PARIS

FIG. 1

## Field of the invention.-

This invention relates to a machine for tying the ends of sausages or the like, adapted to be supplied by a continuous charge formed by a sheetlike support member having therein large apertures surrounded by corresponding rings of a string adhered to the sheetlike support member, said rings forming part of respective open preformed slipknots, joined together by a connecting portion and disposed to be closed by pulling the string at a point along said connecting portion.

The machine is of the type comprising charge supporting and entraining means, string drawing means, slipknot tightening means and purge means for the excess material outside each knot, so that the machine performs successive tying cycles in each of which two sausage ends, of one same sausage or of two different sausages, are simultaneously tied with respective knots made with one same piece of string, providing a new unit portion of charge for a new cycle.

## Prior art.-

Different types of tying machines are already known, among which there may be cited those disclosed in Spanish patents numbers 295.446 and 475.086, both granted to the applicant herefor, which disclose respective embodiments adapted to form and tie a knot around an open end of a sausage tripe. This type of machine may only knot one end of the sausage, which is provided with a suspension loop.

The charge disclosed in German patent 2.352.000 may be applied in this type of machine and its use allows preformed loops to be applied to the end of sausage tripes.

Nevertheless, there are certain types of sausages, such as for example some types of Catalonian pork sausages, in which both ends of one sausage or the ends of two separate sausages are normally tied together with one same piece of string. In the case of a single sausage, this may then be hung from the string, from which is hangs folded on itself on U shape. If, otherwise, two different sausages are considered, they may form part of a string of sausages.

French patents numbers 2.563.183 and 2.576.751 describe respective machines for tying both ends of one same sausage, but both embodiments are industrially unprofitable and do not allow speeds which are minimally acceptable in the modern industry to be achieved, since they relate rather to artisanal knotting solutions.

European Patent Application No. 344.388 of the same applicant discloses a genuinely industrial solution for tying both ends of one same sausage with one same piece of string, using a continuous charge of preformed slip knots.

## Summary of the invention

The present invention relates to a new embodiment of a machine of the type described in the above-mentioned European Patent Application No. 344.388 in which the charge is conducted through the machine during the operative cycle thereof in a more reliable way. In turn, the machine of the present invention is simpler and uses a smaller number of moving parts.

In essence, the machine in questions is characterized in that the charge supporting and entraining means is formed by a hollow cylindrical member having an essentially vertical axis, with a height slightly greater than the width of the charge, provided with apertures similar to those of the latter and with pins adapted to engage in drive holes formed in the charge and forming the entrainment members of the charge as such, said cylindrical member being provided with a rotary movement around its axis, to feed the charge forward step by step in each operative tying cycle, such that the charge is restrained, after each feed step, with two of its apertures provided with string aligned with the respective sausage end insertion positions.

According to a further feature of the invention, there is disposed vertically above said cylindrical hollow member an essentially semicylindrical hollow coaxial support plate having a radius substantially the same as that of the support plate, fixedly attached to the machine frame.

According to a further feature of the invention, the charge slipknot tightening means is formed by two substantially horizontal plates, one for each slipknot, disposed above the upper edge of the charge, with the inner edge thereof at least partially parallel to and separated from the said support plate at a distance therefrom sufficient to allow the passage of the string, when this is drawn upwardly by the drawing means, but insufficient for the slipknots to pass, both plates being spaced apart such as to determine therebetween a space for the passage of the said drawing means.

According to yet a further feature of the invention, the purge means for the excess material outside each knot already tightened on the sausage, is formed by an also essentially semicylindrical hollow purge plate, disposed adjacent the inner surface of the hollow cylindrical member and of the support plate and vertically movable together with the drawing means, said purge plate being provided with two large equal symmetrical orifices, each of which is for allowing the passage of one end of a sausage and is terminated at the lower end thereof by a progressive narrowing connected at the lower end thereof to a narrow downwardly vertically extending aperture, and attached to the concave surface of the purge plate, immediately below said progressive narrowing of each orifice, a pair of parallel rods spaced apart at a constant distant so that an interstice is formed between the rods of each pair, said rods being attached to the purge plate only by the upper ends thereof, and diverging from the purge plate such that they are separated therefrom backwardly and downwardly, said rods being adapted for the respective external end portion of the sausage disposed behind its already tightened knot to be inserted in the corresponding narrow vertical downwardly extending aperture of the purge plate and in the interstice of the respective pair of rods, the latter producing, when rising together with the purge plate, the extraction of the excess material behind the knots at the ends of the sausage, or of the sausages, thanks to a diverging disposition of the rods relative to the purge plate, such that the excess material falls in the interior of the cylindrical portion into known collecting means.

According to yet a further feature of the invention, the said support plate is provided with a pair of oblong vertical central apertures extending to the lower edge of the support plate and which are adapted to allow the passage therethrough of two hooks of the drawing means during the upward and downward movements of the latter in the operative stroke, there being formed between both oblong apertures a narrow central vertical portion of the support plate on the outside of which there is disposed a vertical centre bar attached to the support plate only at the upper and thereof and spaced therefrom along the rest of the length thereof at a constant distance such as to allow the upward passage of the string between the bar and the said central vertical narrow portion of the support plate, while the string is drawn upwardly by the hooks of the drawing means, but which prevents the string from falling back down when the pulling action of the said drawing means is removed, thanks to the friction of the string between the bar and the central vertical narrow portion of the support plate.

Brief description of the drawings.-

Figure 1 is a perspective view of the front portion of the machine, in the string drawing position;
Figure 2 is also a perspective view but on a slightly larger scale, of the drawing means;

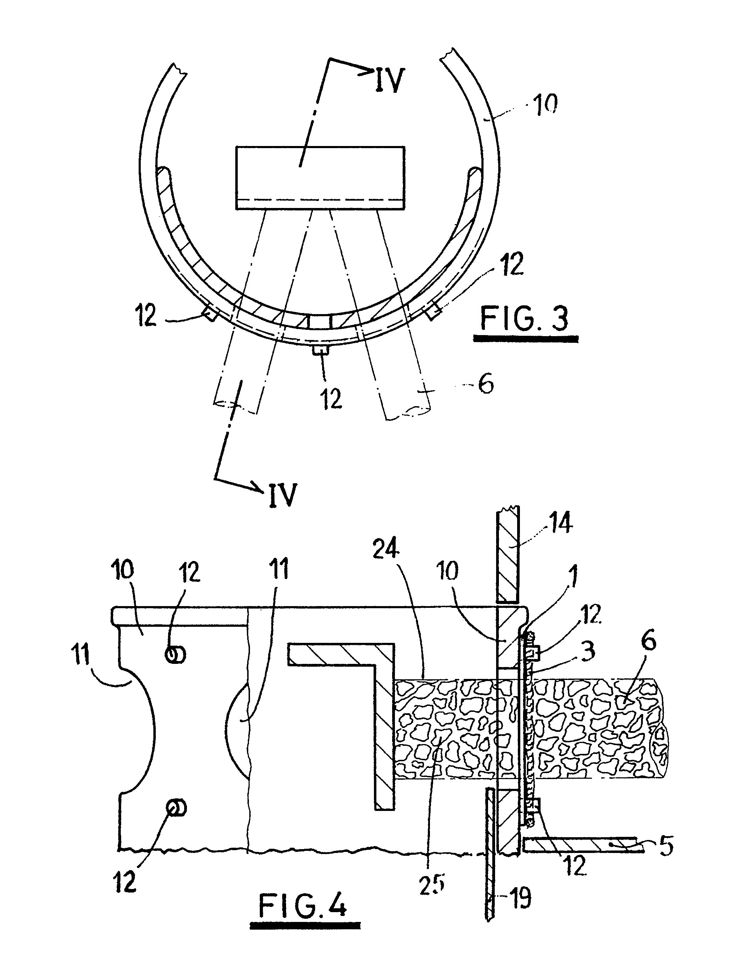

Figure 3 is a schematic cross section view, at a level slightly above the sausage support platform;
Figure 4 is cross section view on the line IV-IV of Figure 3;
Figure 5 is a schematic plan view of the set of knot tightening plates and of the support plates;

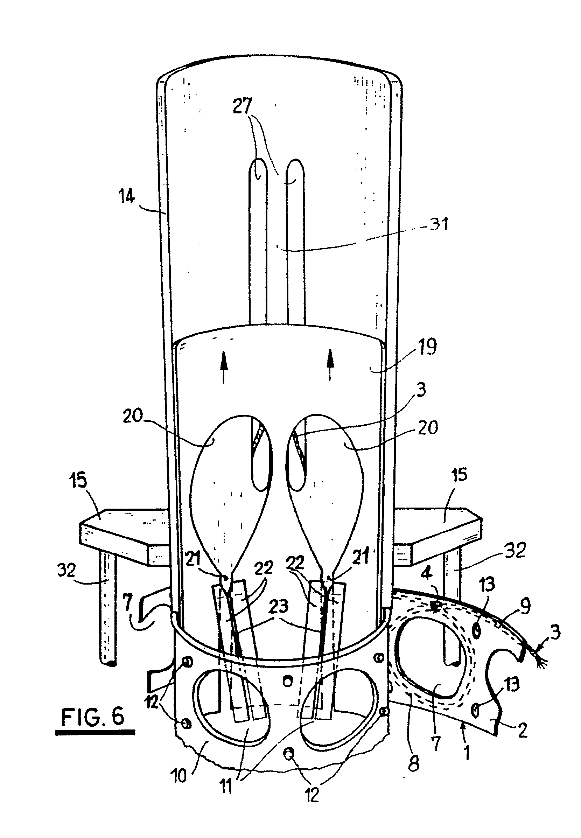

Figure 6 is a perspective view of the rear portion of the machine;
Figures 7 and 8 are respective partial cross section views on a vertical plane corresponding to the initial purging position and to an intermediate purging position of the excess material behind the already tightened knots;

Figure 9 is a perspective view of the front portion of the machine almost at the end of a tying cycle; and

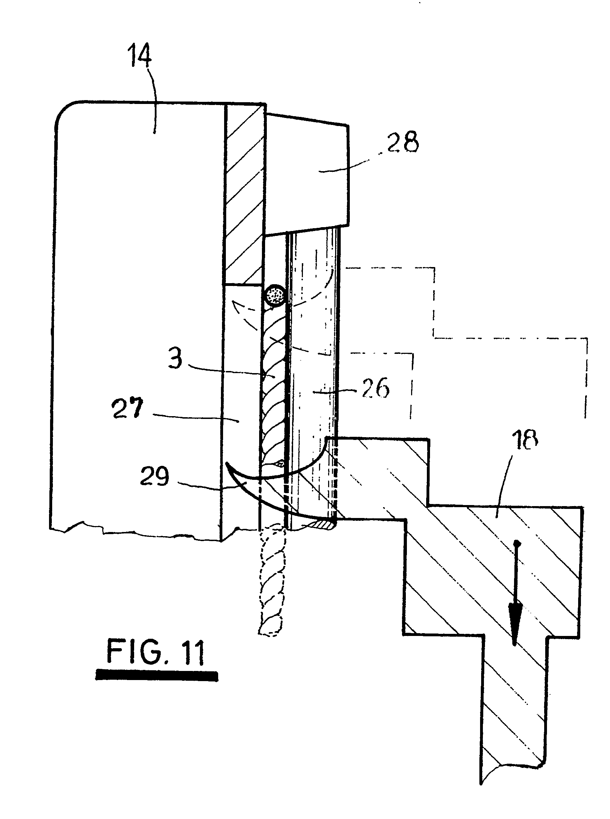

Figures 10 and 11 are respective detail views in cross section and on a larger scale, of the upper portion of the support plate, in the uppermost position of the drawing means and in an intermediate position of descent of said drawing means.

Best form of embodiment of the invention.-

It may be seen in said drawings that the end tying machine for sausages or the like of the invention, in a preferred embodiment, is supplied by a continuous charge 1, formed by a sheetlike support member 2 in which there is attached a string 3 with open preformed slipknots 4 in a position to be closed by pulling the string 3.

The machine comprises a support frame holding in essentially horizontal support platform 5 for the sausage 6 and support and entraining means for the charge 1.

Likewise the machine in question comprises drawing means for the string 3 in an intermediate point thereof, tightening means for slipknots 4, purge means for the excess material outside each knot 4 and entraining means for the drawing means and holding means for the charge 1.

The sheetlike support member 2 for the charge 1. is provided with large apertures 7, surrounded by corresponding rings 8 of slipknots 4, joined together by a connecting portion 9.

Through said apertures 7, the machine operative inserts the ends of the sausage 6, or of two separate sausages, for simultaneous tying with one same piece of string 3, in an operative cycle of the machine.

The supporting and entraining means for the charge 1 is formed by a hollow vertical cylindrical member 10 extending above the said sausage support platform to a height at least the same as the width of the charge 1, provided with apertures 11 similar to those of the latter and with pins 12, adapted to engage the drive holes 13 of the charge 1 and which form the entraining means as such of the charge 1. In a preferred embodiment, the cylindrical member 10 is rigid and has a generally thin wall.

The cylindrical member 10 is provided a rotational movement about its axis, to feed the charge 1 step by step in each operative tying cycle, so that the charge 1 is restrained after each feed, with two of its apertures 11, provided with string, mating with the respective insertion positions of the ends of the sausage 6.

Above the cylindrical member 10 there is disposed a coaxial, hollow, esentially cylindrical support plate 14 having the same radius thereas, rigidly attached to the machine frame.

The tightening means for the slipknots 4 of the charge 1 is formed by two substantially horizontal plates 15, one for each knot 4, symetrically disposed above the upper edge of the charge 1 with their internal edge at least partially parallel to and spaced apart from the said support plate 14 at a distance therefrom sufficient to allow the passage of the string 3 when this is drawn upwards by the drawing means, but insufficient to allow the slipknots 4 to pass.

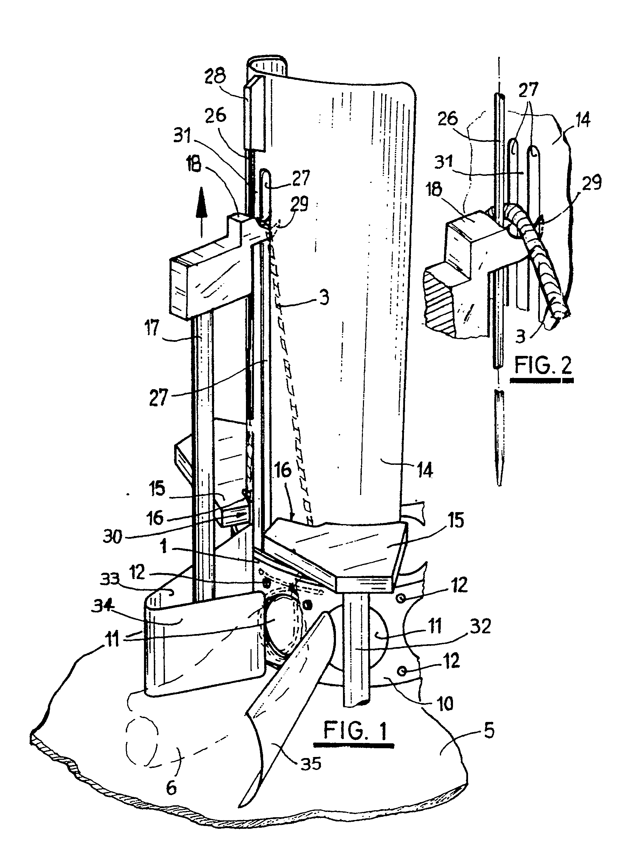

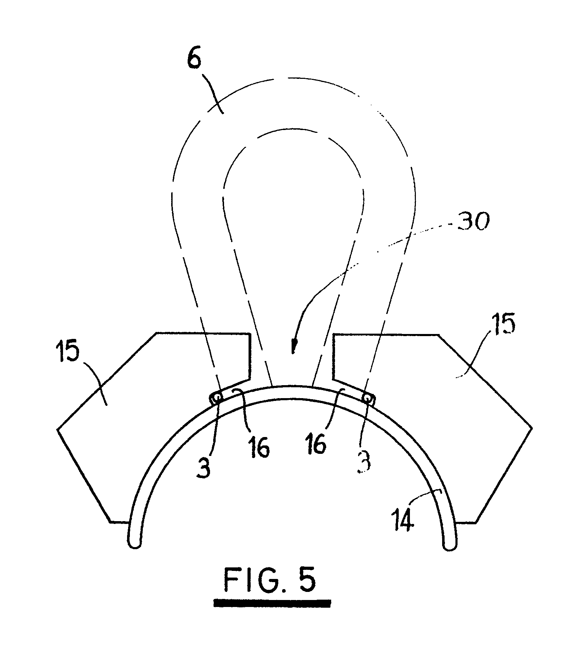

The two plates 15 are spaced apart from each other so as to determine therebetween a space 30 (Figures 1 and 5). Said plates 15 are supported on the platform 5 by respective columns 32.

The machine is provided with drawing means formed by a vertically movable drawing rod 17 which is provided at the upper end thereof with a head 18 having two hooks 29, adapted to engage the string 3 of the charge 1 at an intermediate point of the connecting portion 9 between two rings 8 of a unit portion of the charge 1. The string 3 is caused to rise in the operative stroke and once the operative cycle is terminated the rod 17 descends to its lower rest position.

When the head 18 passes in front of the member 10 during its upward and downward movements, it also moves slightly outwards so that the hooks 29 may pass outside the outer surface of the cylindrical member 10. Said head 18 remains, in the rest position thereof, within the space comprised between two central vertical walls 33 and 34, adapted for guiding the ends of the sausage towards the apertures 11.

The said central guiding walls 33 and 34 are complemented with respective concave side guide walls 35.

The drawing means are advantageously provided with a resilient means, not shown, to compensate for the excessive drawing stress of the string 3.

The purge means for the excess material 25 behind each already tied knot 4, is formed by a purge plate 19, also hollow and essentially cylindrical, disposed adjacent the inner surface of the hollow cylindrical member 10 and vertically movable together with the rod 17.

The purge plate 19 is provided with two large symmetrical equal holes 20, each of which is for allowing the passage of one end of the sausage 6 and is terminated at the bottom thereof in a progressive narrowing portion, by which it is connected to a downwardly extending narrow vertical aperture 21.

Immediately below said progressive narrowing of each hole 20, there are attached to the concave surface of the purge plate 19 a pair of parallel rods 22 spaced apart so as to form therebetween a narrow interstice 23.

The rods 22 are connected to the purge plate 19 only by their respective upper ends and diverge from the plate 19 so as to separate therefrom backwardly and downwardly. In the embodiment shown in the accompanying drawings, said rods 22 are flat, but they could also be quadrangular, circular or have any other section.

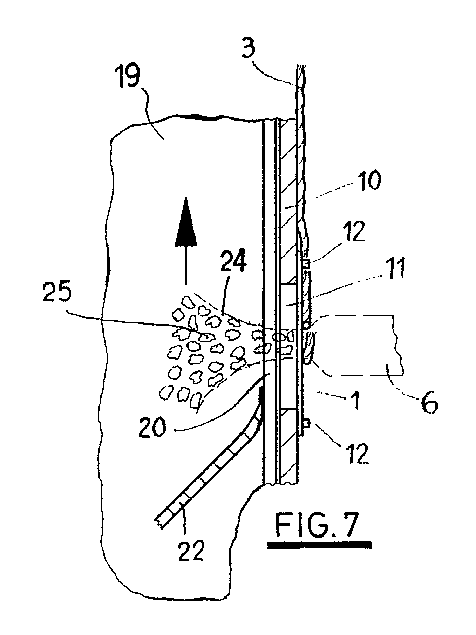

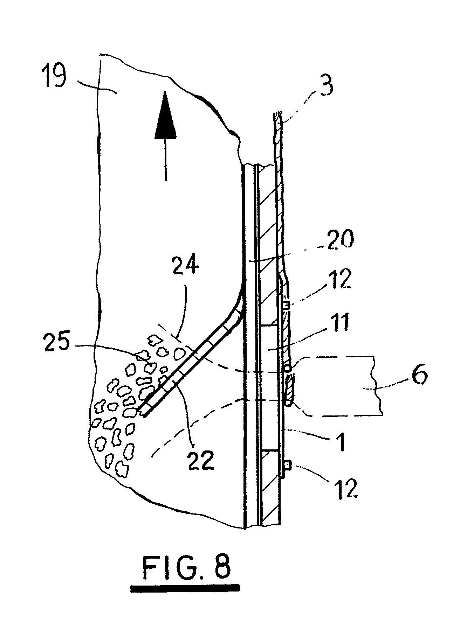

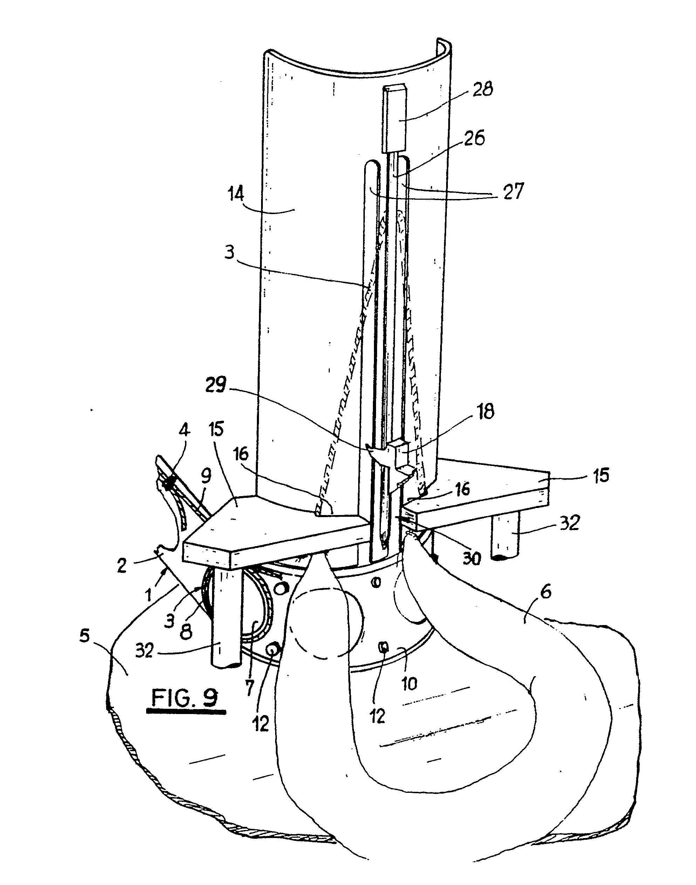

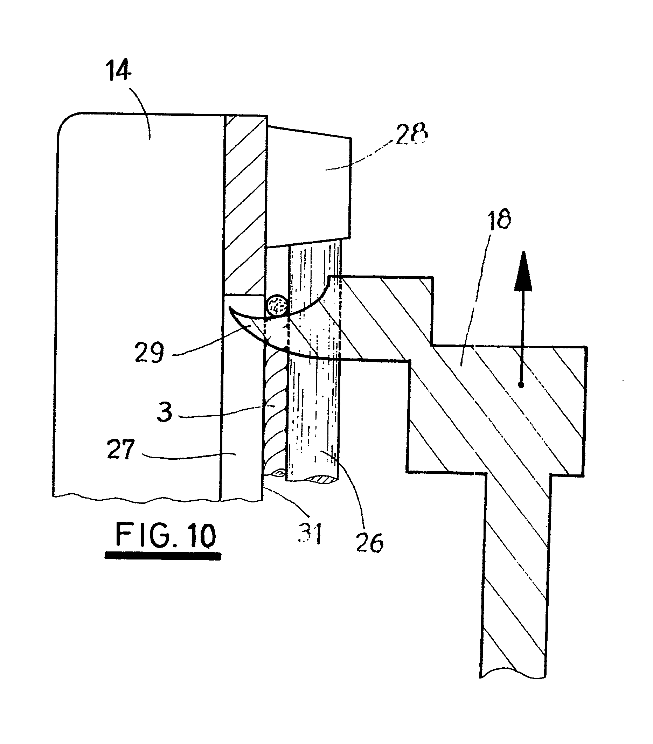

In an operative cycle, immediately after the knots 4 have been tightened the purge means rise together with the drawing means. Due to this, the respective external portions 24 of the sausage 6, disposed behind each knot 4, are inserted in the corresponding vertical narrow apertures 21 of the plate 19 and in the interstices 23 of the pairs of rods 22, the latter causing, when they rise together with the purge plate 19, the outward removal of the excess material 25 behind the knot 4 at the ends of the sausage 6, thanks to the divergent disposition of the rods 22 with respect to the plate 19. The excess material 25 falls inside the cylindrical member 10 (Figures 7 and 8) inside known, not shown, collecting means.

The support plate 14 is provided in the centre thereof with a pair of oblong vertical apertures 27, which extend to the lower edge of the support plate 14 and are adapted to allow the passage therethrough of two hooks 29 with which the head 18 of the rod 17 of the drawing means is provided, during the upward and downward movements of the latter in the operative stroke.

Between both said apertures 27 there is a narrow central vertical portion 31 of the support plate 14 outside which there is disposed a vertical centre bar 26, attached to the support plate 14, only at the upper end and spaced apart therefrom over the remaining length at a constant distance, so as to allow the passage in the upward direction of the string 3 between the bar 26 and the narrow portion 31 of the support plate 14, while the string 3 is drawn upwards by the hooks 29 of the drawing means, but which prevents the string 3 falling back down, when the pulling action of the drawing means ceases, thanks to the friction of the string 3 between the bar 26 and the vertical centre narrow portion 31 of the support plate 14.

Having sufficiently described the nature of the invention, as well as the way it may be reduced to practice, it is stated that all that does not alter, change or modify the fundamental principle thereof, may be subject to variations of detail, with the essence for which a patent for 20 years is applied for, being what is summarized in the following claims.

## Claims

1.- A machine for tying the ends of sausages or the like, of the type which are supplied by a continuous charge formed by a sheetlike support member having therein large apertures surrounded by corresponding rings of a string adhered to the sheetlike support member, said rings forming part of respective open preformed slipknots, joined together by a connecting portion and disposed to be closed by pulling the string at a point of said connecting portion, the machine comprising charge supporting and entraining means, string drawing means, slipknot tightening means and purge means for the excess material outside each knot, so that the machine performs successive tying cycles in each of which two sausage ends, of one same sausage, or of two different sausages, are simultaneously tied with respective knots made with one same piece of string, characterized in that the charge supporting and entraining means is formed by a hollow cylindrical member having an essentially vertical axis, extending above said support platform to a height at least the same as the width of the charge, provided with apertures similar to those of the latter and with pins adapted to engage in drive holes formed in the charge and forming the entrainment members of the charge as such, said cylindrical member being provided with a rotary movement around its axis, to feed the charge forward step by step in each operative tying cycle, such that the charge is restrained, after each feed step, with two of its apertures provided with string aligned with the respective sausage end insertion positions.

2.- A tying machine according to claim 1, characterized in that there is disposed vertically above said cylindrical hollow member an essentially semicylindrical hollow coaxial support plate having a radius substantially the same as that of the support plate, fixedly attached to the machine frame.

3.- A tying machine according to claims 1 and 2, characterized in that the said charge slipknot tightening means is formed by two substantially horizontal plates, one for each slipknot, symmetrically disposed above the upper edge of the charge, with the inner edge thereof at least partially parallel to and separated from the said support plate at a distance therefrom sufficient to allow the passage of the string, when this is drawn upwardly by the drawing means, but insufficient for the slipknots to pass, both plates being spaced apart such as to determine therebetween a space for the passage of the said drawing means.

4.- A tying machine according to claims 1 to 3, characterized in that said the purge means for the excess material outside each knot already tightened on the sausage, is formed by an also essentially semicylindrical hollow purge plate, disposed adjacent the inner surface of the hollow cylindrical member and of the support plate and vertically movable together with the drawing means, said purge plate being provided with two large equal symmetrical orifices, each of which is for allowing the passages of one end of a sausage and is terminated at the lower end thereof by a progressive narrowing connected at the lower end thereof to a narrow downwardly vertically extending aperture, and attached to the concave surface of the purge plate, immediately below said progressive narrowing of each orifice, a pair of parallel rods spaced apart at a constant distance so that an interstice is formed between the rods of each pair, said rods being attached to the purge plate only by the upper ends thereof, and diverging from the purge plate such that they are separated therefrom backwardly and downwardly, said rods being adapted for the respective external end portion of the sausage disposed behind its already tightened knot to be inserted in the corresponding narrow vertical downwardly extending aperture of the purge plate and in the interstice of the respective pair of rods, the latter producing, when rising together with the purge plate, the extraction of the excess material behind the knots at the ends of the sausage, or of the sausages, thanks to a diverging disposition of the rods relative to the purge plate, such that the excess material falls in the interior of the cylindrical portion into known collecting means.

5.- A tying machine according to claims 1 to 4, characterized in that said support plate is provided at the centre thereof with a pair of oblong vertical apertures extending to the lower edge of the support plate and which are adapted to allow the passage therethrough of two hooks of the drawing means during the upward and downward movements of the latter in the operative stroke, there being formed between both oblong apertures a narrow central vertical portion of the support plate on the outside of which there is disposed a vertical centre bar attached to the support plate only at the upper end thereof and spared therefrom along the rest of the length thereof at a constant distance such as to allow the upward passage of the string between the bar and the said central vertical narrow portion of the support plate, while the string is drawn upwardly by the hooks of the drawing means, which prevents the string from falling back down when the pulling action of the said drawing means is removed, thanks to the friction of the string between the bar and the central vertical narrow portion of the support plate.

FIG. 1

FIG. 2

FIG. 3

FIG.4

FIG. 5

FIG. 6

FIG.7

FIG. 8

FIG. 9

FIG. 10

14

28

3

27

26

18

29

FIG. 11

European Patent Office

## EUROPEAN SEARCH REPORT

Application Number

EP 91 50 0034

### DOCUMENTS CONSIDERED TO BE RELEVANT

| Category | Citation of document with indication, where appropriate, of relevant passages | Relevant to claim | CLASSIFICATION OF THE APPLICATION (Irt. Cl.5) |
|---|---|---|---|
| D,A | EP-A-344 388 (BARROSO)<br>* the whole document * | 1-4 | A22C11/12 |
| A | FR-A-732 135 (PERRIN) | | |
| D,A | FR-A-2 576 751 (TURROQUES) | | |
| D,A | FR-A-2 563 183 (CHARLES) | | |
| A | FR-A-2 451 317 (TURROQUES) | | |
| A | FR-A-2 627 455 (INDAR) | | |

TECHNICAL FIELDS SEARCHED (Int. Cl.5)

A22C

The present search report has been drawn up for all claims

| Place of search | Date of completion of the search | Examiner |
|---|---|---|
| THE HAGUE | 02 JULY 1991 | De Lamellieure |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)